# EUROPEAN PATENT APPLICATION

(11) **EP 3 530 433 A1**
(43) Date of publication of application: **28.08.2019**
(21) Application number: 19158683.3
(22) Date of filing: 21.02.2019
(51) Int. Cl.: B29C 59/14, B29C 45/00, B29C 33/56, H05H 1/00

(54) **ARRANGEMENT AND METHOD FOR PLASMA TREATMENT OF WORKPIECES**

(30) Priority: 23.02.2018 IT 201800002997
(71) Applicant: F.T. Famat S.r.l., 10080 San Benigno Canavese (TO) (IT)
(72) Inventor: VAZZOLER, Marco, 10080 SAN BENIGNO CANAVESE (TO) (IT); VAZZOLER, Flavio, 10080 SAN BENIGNO CANAVESE (TO) (IT)
(74) Representative: Robba, Pierpaolo

(57) **Abstract**

The present invention relates to an arrangement (1) and a method for plasma treatment of workpieces (M), more particularly workpieces made of plastic material, even more particularly workpieces made of plastic material and obtained by moulding. The plasma treatment arrangement (1) according to the invention comprises a mould formed by at least one or more mould elements (3, 5), wherein at least one of said mould elements is provided with one or more ducts (13; 13'; 13a, 13b) for an ionizable gas, each of said ducts ending with a respective nozzle (17; 17'; 17a, 17b) opening at the surface of said mould element facing the cavity receiving the workpiece to be treated, and with one or more electric discharge generators (19; 19'; 19a, 19b) ending at the surface of said mould element facing the cavity receiving the workpiece to be treated. With respect to prior art plasma treatment arrangements and methods, it is not necessary to create vacuum conditions and the mould elements are not used as electrodes for creating an electric field, said electric discharge generators (19; 9'; 19a, 19b) being provided for this purpose.

## Description

### Technical Field of the Invention

The present invention relates to an arrangement for plasma treatment of workpieces, more particularly workpieces made of plastic material, even more particularly workpieces made of plastic material and obtained by moulding.

The present invention can find application in several fields, among which the automotive field, for treating bumpers and other workpieces of plastic material.

### Prior Art

Plasma treatment is a process of surface modification of a substrate subjected to the action of the constituents of a gas in plasma state.

A method for creating plasma consists in providing an ionizable gas and passing said ionizable gas through an electric field: the electric field excites the gas and ionizes the single molecules in the gas in order to form plasma.

Arrangements and methods for the plasma treatment of the surface of workpieces, in particular workpieces made of plastic material, are known.

Plasma treatment is an effective solution for removing possible contaminant particles from surfaces.

In addition, plasma treatment of workpieces made of plastic material is also useful for antistatic reasons.

Furthermore, cleaning of the surface of workpieces made of plastic material by means of plasma treatments significantly affects the adhesion of paints, coatings, inks and adhesives subsequently applied to the surface of the workpieces.

Arrangements and methods for plasma treatment are therefore used in all those applications in which it is deemed necessary or convenient to prepare the surface of said workpieces of plastic material for subsequent varnishing processes or for applying other coatings. Arrangements for plasma treatment in an open environment, under atmospheric pressure, are known.

These arrangements provide for using one or more heads (torches) that are mounted on robot arms and are moved over the surface to be treated of the workpiece, at a small distance therefrom.

Use of such arrangements, however, involves high processing times in the case of large-sized workpieces, because plasma heads must be moved over the whole surface of said workpieces.

In order to reduce processing times, arrangements for low pressure plasma treatments have been developed.

In such arrangements, one or more workpieces are placed in an airtight chamber and the pressure of the airtight chamber is reduced to a value typically ranging from 1 to 0,01 Torr. An ionizable gas is then introduced into the airtight chamber and the gas is transformed into plasma by means of an electric field created between two electrodes. The plasma thus created treats all the exposed surfaces of the workpieces within the airtight chamber.

Said arrangements have the disadvantage of requiring a dedicated chamber for the low pressure treatment of workpieces, which chamber must each time be completely evacuated at a relatively lower pressure: the larger the chamber, the longer the evacuation times and the more expensive and complex the single components necessary in order to create the low pressure conditions and to create plasma.

Document US 2009/174120 shows a plasma treatment arrangement in which a workpiece is moulded by injection moulding between two moulds, at least one of which is movable so as to be able to create a gap between said mould and the moulded workpiece; the arrangement comprises means for creating vacuum conditions in said gap, means for introducing an ionizable gas into said gap, and means for creating an electric discharge in said ionizable gas by means of microwaves, so as to create a plasma in said gap. As an alternative to the presence of such means for creating vacuum conditions in the gap, according to what is described in US 2009/174120, the whole arrangement can be housed in a chamber under vacuum conditions.

Also document EP 541 230 shows a method for plasma treatment of a workpiece in a mould, said method providing for placing a workpiece to be treated between the two mould elements, creating a gap between the one of the mould elements and the workpiece to be treated, creating vacuum conditions in said gap, introducing an ionizable gas into said gap, and creating a plasma in said gap. By making a gap small enough between the mould and the workpiece to be treated it is possible to create vacuum conditions in said gap in reasonably short times and by using low-cost pumps and valves.

Also a solution of the type described above is not free from drawbacks.

First of all, it is in any case necessary to provide adequate means to create the desired vacuum conditions inside the gap.

Secondly, in the method described in EP 541 230 the electric field for making plasma is obtained by creating a potential difference between the two mould elements, that is to say by using the two mould elements as electrodes. This entails the need to modify the mould elements so that they can be effectively used as electrodes, with a consequent increase in the production costs of the arrangement.

On the other hand, in the arrangement described in US 2009/174120 the use of microwaves for generating the electric discharge involves the need to provide screens for electromagnetic radiation.

The document WO 2016/012884 illustrates an arrangement for manufacturing workpieces made of plastic material in which the surface of the workpieces is sterilized by means of a plasma treatment step at a pressure equal to or higher than the atmospheric pressure.

However, even in the arrangement described in the aforementioned document, the two elements of the mould used for blowing are used as electrodes, which entails a costly modification of said elements with respect to a traditional blow mould.

The main object of the present invention is to overcome the drawbacks of the prior art, by providing an arrangement and a method for the plasma treatment of workpieces, in particular of workpieces made of plastic material, which entails limited production costs and short treatment times.

Another object of the present invention is to provide an arrangement and a method for the plasma treatment of workpieces made of plastic material, which involves limited modifications to traditional arrangements and methods of moulding workpieces made of plastic material.

These and other objects of the present invention are achieved by the arrangement and the method as claimed in the appended claims.

### Summary of the Invention

The arrangement for plasma treatment of workpieces according to the invention comprises a mould consisting of at least a first and a second mould elements, which are configured so as to define between them a cavity having a shape and size substantially equal to those of the workpiece to be treated, at least one of said mould elements being designed as movable; according to the invention, at least one of said mould elements is provided with one or more ducts for an ionizable gas, each of said ducts ending with a corresponding nozzle opening at the surface of said mould element facing said cavity receiving the workpiece to be treated, and one or more electric discharge generators ending at the surface of said mould element facing said cavity receiving the workpiece to be treated.

The arrangement according to the invention operates at a pressure equal or substantially equal to the atmospheric pressure, whereby it is unnecessary to provide use of chambers under vacuum conditions and/or means for evacuating the space in which the workpiece to be treated is arranged.

The method for plasma treatment of workpieces provides for:
- providing the workpiece to be treated in the cavity provided between the two mould elements;
- moving the mould elements away from each other so as to obtain at least one narrow gap between at least one of the mould elements and the surface of the workpiece facing said mould element;
- introducing an ionizable gas into said at least one gap by means of said one or more nozzles;
- producing an electric discharge through said ionizable gas by means of said one or more electric discharge generators, so as to transform said ionizable gas into plasma;
wherein said steps are carried out at a pressure equal or substantially equal to the atmospheric pressure.

Advantageously, the thus generated plasma treats the whole surface of the workpiece facing the gap.

The arrangement and the method according to the invention show clear advantages over prior art plasma treatments.

First of all, it is not necessary to create vacuum conditions inside the gap and, consequently, it is not necessary to use pumps and valves to evacuate said gap. Moreover, it can also be provided that the use of gaskets to make the gap waterproof is not essential.

This involves a considerable simplification of the arrangement and a consequent reduction in production costs.

Secondly, the mould elements are not used as electrodes to create an electric field, but one or more electric discharge generators are provided for this purpose.

Consequently, traditional mould elements can be used for making the arrangement according to the invention without the need to make any modifications, except for the making of channels for the one or more ducts for the ionizable gas connected to the respective nozzles for the introduction of ionizable gas and for the one or more electric discharge generators.

In a preferred embodiment of the invention, the plasma treatment arrangement is configured to treat only one surface of the workpiece, leaving the opposite surface of the workpiece untreated.

In this embodiment of the invention, the one or more nozzles for introducing ionizable gas and the one or more electric discharge generators are provided on the mould element facing the workpiece surface to be treated.

Moreover, in this embodiment of the invention, the arrangement preferably provides means for moving the workpiece surface to be treated away from the mould element carrying the one or more nozzles for the introduction of ionizable gas and the one or more electric discharge generators, and/or means for making the workpiece surface to be left untreated adhere against the surface of the opposite mould element.

In another preferred embodiment of the invention, the plasma treatment arrangement is configured to treat both opposite surfaces of the workpiece.

In this embodiment of the invention, both mould elements are provided with one or more ducts for introducing ionizable gas and one or more electric discharge generators.

In addition, in this embodiment of the invention, the arrangement preferably provides means for moving the workpiece away from both mould elements, thus forming a first gap between a first surface of the workpiece and a first mould element and a second gap between a second, opposite surface of the workpiece and a second mould element.

In an embodiment of the invention, the arrangement according to the invention is a dedicated arrangement for the plasma treatment of previously made workpieces of plastic material.

However, in a preferred embodiment, directed in particular to the plasma treatment of workpieces made of plastic material, the arrangement according to the invention is used both for the manufacture of the workpiece of plastic material, and for the subsequent plasma treatment thereof.

In this preferred embodiment of the invention, at least one of the mould elements comprises a duct for the injection of molten plastic material into the cavity defined between the mould elements.

The arrangement and the method according to the invention can be used for a plasma treatment of a workpiece, in particular of a workpiece made of plastic material, aimed at improving the adhesion properties of the surface of said workpiece.

For this purpose, any appropriate ionizable gas (such as, for example, nitrogen, helium, etc.) can be used in the arrangement and in the method according to the invention.

The arrangement and the method according to the invention can also be used for a plasma treatment of a workpiece, in particular a workpiece made of plastic material, aimed at depositing a desired substance (for example, an amine) onto the surface of said workpiece. For this purpose, in addition to the nozzle or nozzles for the introduction of an ionizable gas, one or more additional nozzles are provided on the inner surface of the mould element, for the introduction of the substance to be deposited.

In this embodiment, too, any appropriate ionizable gas (such as, for example, nitrogen, helium, etc.) can be used in the arrangement and in the method according to the invention.

### Brief Description of the Figures

Further features and advantages of the invention will become more evident from the detailed description of some embodiments of the invention, given as a non-limiting example, with reference to the attached drawings, in which:
- Figure 1 schematically shows in a cross-sectional view a plasma treatment arrangement according to a first embodiment of the invention;
- Figure 2 schematically shows in a cross-sectional view a plasma treatment arrangement according to a second embodiment of the invention;
- Figure 3 schematically shows in a cross-sectional view a plasma treatment arrangement according to a third embodiment of the invention.

### Description of a Preferred Embodiment of the Invention

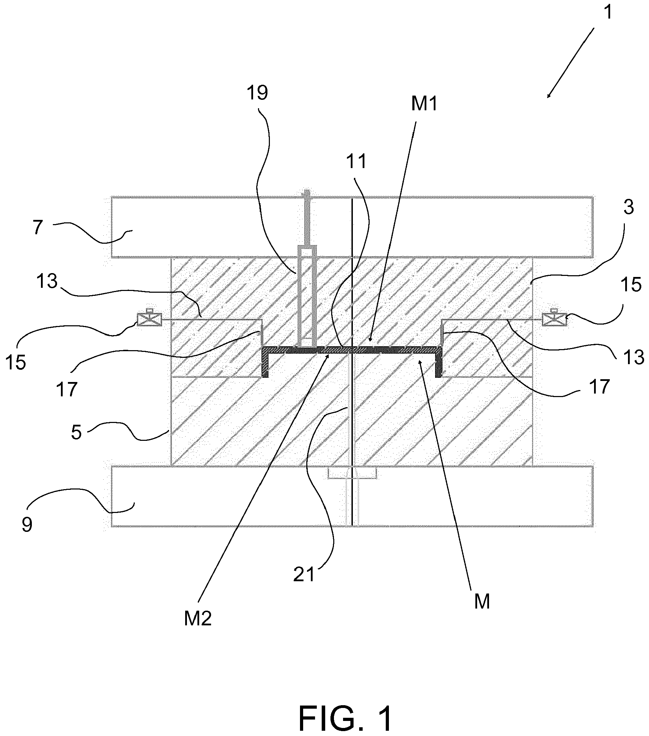

Referring at first to Figure 1, a plasma treatment arrangement according to a first embodiment of the invention is shown, indicated as a whole by reference numeral 1.

The arrangement comprises a mould formed by one or more mould elements designed so that they define between them a cavity 11 having a shape and size substantially equal to those of the workpiece M to be treated.

In the illustrated example, the mould comprises only a first mould element 3, designed as movable, and a second mould element 5, designed as stationary. However, it is also possible that the mould comprises a higher number of mould elements, designed as movable relative to one another, for example in the case in which the workpiece M to be treated has a complex shape and/or undercuts.

The second mould element 5 is mounted on a fixed basement 9.

The first, movable mould element 3, instead, is mounted on a press 7, which allows to move said first mould element 3 close to or away from the second mould element 5.

When the two mould elements are in mutual contact (that is to say, when they are at the minimum possible distance from each other), they define the cavity 11, having a shape and size substantially equal to those of the workpiece M to be treated. In this configuration, therefore, the opposite surfaces M1, M2 of the workpiece M are substantially in contact with corresponding surfaces of the first and the second mould elements 3,5.

According to the invention, the arrangement 1 is provided with means for the plasma treatment of at least one of the surfaces M1, M2 of the workpiece M.

According to the illustrated embodiment of the invention, the arrangement 1 is provided with means for the plasma treatment of a first surface M1 of the workpiece M.

For this purpose, the first mould element 3 is provided with one or more ducts 13 for the introduction of an ionizable gas, which ducts are connected to respective sources of ionizable gas 15 and end with respective nozzles 17 opening at the surface of the first mould element facing the cavity 11, i.e. towards the surface to be treated M1 of the workpiece M. In the illustrated example, two ducts 13 are provided, arranged on opposite sides of the cavity 11, but it will be evident to the person skilled in the art that it is also possible to provide a different number of ducts and respective nozzles.

It is also possible to provide that there is only one source of ionizable gas from which several ducts provided with respective nozzles branch out.

The first mould elements 3 is further provided with one or more electric discharge generators 19, which end at the surface of the first mould element facing the cavity 11, i.e. towards the surface to be treated M1 of the workpiece M.

Said one or more electric discharge generators 19 are electrically insulated from the first mould element 3.

Said one or more electric discharge generators can have any structure known to the person skilled in the art. For example, they may comprise a pair of electrodes between which a potential difference is established, and an element for generating a spark arranged between said electrodes and adapted to produce the electric discharge.

In the illustrated example, only one electric discharge generator 19 is provided, but it will be evident to the person skilled in the art that it is also possible to provide a different number of generators.

In order to accelerate and optimize the ionization of the gas and the creation of plasma, it is also possible to envisage arranging the electric discharge generator directly inside the ionizable gas duct, near the nozzle thereof.

As is evident from the above description, the arrangement 1 according to the invention operates at a pressure equal to or substantially equal to the atmospheric pressure, so that it has no means for evacuating the cavity 11.

The method for plasma treatment according to the invention by means of the arrangement 1 described above provides for:
- providing the workpiece to be treated in the cavity 11 between the first and second mould elements 3, 5, while said elements are maintained at the minimum possible distance from each other (i.e. in mutual contact);
- moving the first mould element 3 away from the second mould element 5 so as to obtain a narrow gap between the first mould element 3 and the first surface M1, of the workpiece M, facing said first mould element;
- introducing an ionizable gas into said gap by means of the nozzles 17 of the ducts for the introduction of ionizable gas 13;
- producing an electric discharge through the thus introduced ionizable gas by means of the electric generator 19, thus transforming said ionizable gas into plasma;
- treating the first surface M1 of the workpiece M with the thus produced plasma,
   said steps being carried out at a pressure equal or substantially equal to the atmospheric pressure.

Any ionizable gas known in the art for the creation of plasma (for example, nitrogen, helium, etc.) can be used to implement the method described above.

Thanks to the reduced volume of the gap between the first surface M1 of the workpiece M and the first mould element 3, a reduced quantity of ionizable gas is sufficient to treat the whole surface of the workpiece M.

Processing times as well as operating costs are therefore limited.

Since the arrangement and the method described above provide for the plasma treatment to take place at atmospheric pressure, no pumps and valves are required for creating vacuum conditions in the cavity 11. Furthermore, it is also possible that the use of gaskets to make said cavity airtight can be avoided.

In addition, as is evident from the preceding description, and unlike prior art arrangements, the mould elements 3, 5 are not used as electrodes for the creation of an electric field through the ionizable gas, but, on the contrary, said electric field is generated by the electrical discharge generator 19, which is isolated from the first mould element 3.

Therefore, the mould elements 3, 5 do not intervene in any way in the generation of plasma. They remain at the same potential, particularly preferably at the zero potential, throughout the plasma treatment process.

Consequently, conventional mould elements 3, 5 can be used in the arrangement and the method according to the invention, with minimal modifications, which are limited to the provision of channels for the passage of the ducts 13 for the ionizable gas and the provision of the electric discharge generator 19.

In an embodiment of the invention, the arrangement is a dedicated arrangement for the plasma treatment of a previously made workpiece, which is arranged in the cavity 11 between the mould elements 3, 5.

However, in the preferred embodiment shown in Figure 1, particularly directed to the treatment of workpieces made of plastic material, the arrangement 1 is used both for the manufacture of the workpiece made of plastic material and for the subsequent plasma treatment thereof.

For this purpose, the second mould element 5 comprises a duct 21 for the injection of molten plastic material into the cavity 11.

The molten plastic material is introduced into the cavity 11 through the duct 21, thus forming the workpiece M. Once the plastic material has solidified and cooled, the plasma treatment is carried out in the manner described above.

In order to guarantee the creation of the gap between the first mould element 3 and the first surface M1 of the workpiece M, the surface of said first mould element 3, can be provided, at the cavity 11, with means (not shown) for urging the workpiece M away from the first mould element 3 and against the surface of the second mould element.

Said means may comprise, for example, nozzles which direct jets of pressurized air against the first surface M1 of the workpiece M.

Said means, in addition to ensuring the correct formation of the gap between the first surface M1 of the workpiece M and the first mould element 3, allow to protect the second, opposite surface M2 of said workpiece, preventing it from being also hit by the plasma.

In addition, or as an alternative, the surface of the second mould element 5 can be provided, at the cavity 11, with means (not shown) for retaining the second surface M2 of the workpiece M, opposite to the first surface to be treated M1, against themselves.

For example, the second mould element 5 can be provided with suction means for retaining the second surface M2 of the workpiece against themselves.

In this case, too, the means described above, in addition to ensuring the correct formation of the gap between the first surface M1 of the workpiece M and the first mould element 3, allow to protect the second opposite surface M2 of said workpiece, preventing it from being also hit by the plasma.

In addition to being able to be used for the plasma treatment of the surface of a workpiece, the arrangement 1 according to the invention can also be used to deposit a desired substance, such as an amine, onto the surface of said workpiece.

In this case, it will be sufficient to provide, in the first mould element 3, one or more additional ducts (not shown) for the introduction of the substance to be deposited, which ducts are connected to respective sources of said substance and end with respective nozzles opening at the surface of the first mould element 3 facing the cavity 11, i.e. towards the surface to be treated M1 of the workpiece M.

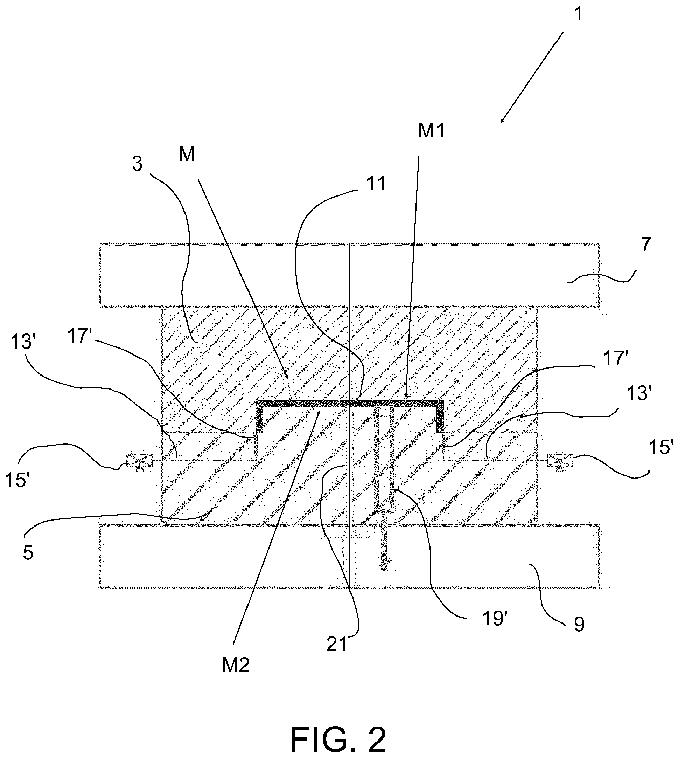

Turning to Figure 2, an arrangement 1 for plasma treatment according to a second embodiment of the invention is illustrated.

Said second embodiment entirely corresponds to the first embodiment described above, except that the arrangement 1 illustrated in Figure 2 is configured for the plasma treatment of the second surface M2 of the workpiece M.

Consequently, one or more ducts 13' for the introduction of an ionizable gas (two in the example shown in Figure 2) are provided in the second mould element 5, said ducts 13' being connected to respective sources of ionizable gas 15' and ending with respective nozzles 17' opening at the surface of the second mould element facing the cavity 11, i.e. towards the surface to be treated M2 of the workpiece M.

One or more electric discharge generators 19' (one in the example shown in Figure 2) are provided in the second mould element 5, said electric discharge generators being electrically insulated from the second mould element 5 and facing the surface of the second mould element facing the cavity 11, i.e. towards the surface to be treated M2 of the workpiece M. Correspondingly, the surface of said second mould element 5 can be provided, at the cavity 11, with means (not shown) for urging the workpiece M away from the second mould element 5 and against the surface of the first mould element and/or the surface of the first mould element 3 can be provided, at the cavity 11, with means (not shown) for retaining the first surface M1 of the workpiece M, opposite to the second surface to be treated M2, against themselves.

In this case, too, in the event of a plasma deposition of a desired substance onto the second surface M2 of the workpiece M, one or more additional ducts (not shown) for the introduction of the substance to be deposited may be provided in the second mould element 5.

In this case, too, the arrangement 1 operates at a pressure equal or substantially equal to the atmospheric pressure.

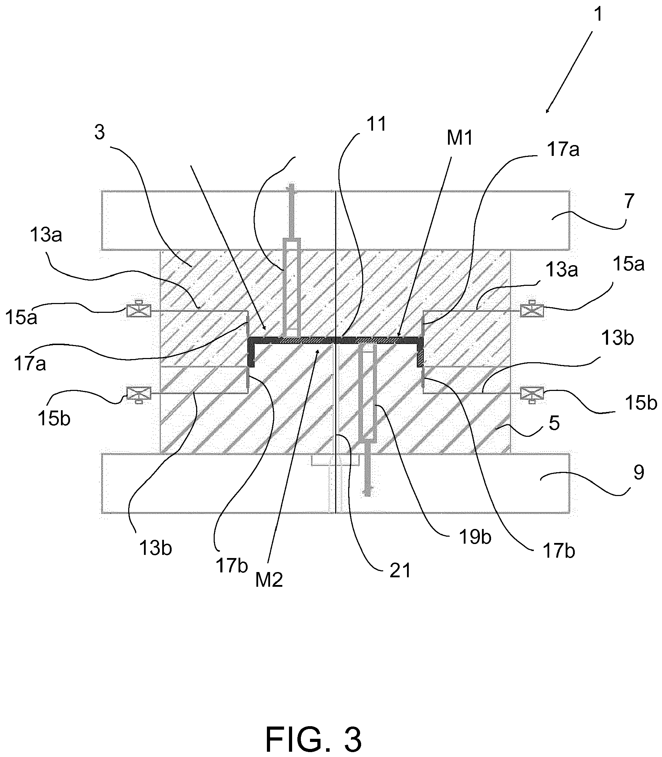

Turning to Figure 3, an arrangement 1 for plasma treatment according to a third embodiment of the invention is illustrated.

In said third embodiment, the arrangement 1 is configured for the plasma treatment of both surfaces M1, M2 of the workpiece M.

Consequently, one or more ducts 13a, 13b for the introduction of an ionizable gas (two in the example illustrated in Figure 3) are provided in each mould element 3, 5, said ducts 13a, 13b being connected to respective sources of ionizable gas 15a, 15b and ending with respective nozzles 17a, 17b opening at the surface of said mould element facing said cavity 11.

In addition, one or more electric discharge generators 19a, 19b (one in the example illustrated in Figure 3) are provided in each mould element 3, 5, said electric discharge generators being electrically insulated from the respective mould element and ending at the surface of the respective mould element facing the cavity 11, i.e. towards the surfaces M1, M2 of the workpiece M.

According to this embodiment, the plasma treatment method comprises the steps of:
- providing the workpiece to be treated in the cavity 11 between the first and second mould elements 3, 5, while said elements are maintained at the minimum possible distance from each other (i.e. in mutual contact);
- moving the first mould element 3 away from the second mould element 5 so as to obtain a narrow gap between the first mould element 3 and the first surface M1, of the workpiece M, facing said first mould element, and a second gap between said second mould element 5 and the surface M2, of the workpiece M, facing said second mould element;
- introducing an ionizable gas into both gaps by means of the nozzles 17a, 17b of the ducts for the introduction of an ionizable gas 13a, 13b, respectively;
- producing an electric discharge through the thus introduced ionizable gas by means of the electric discharge generators 19a, 19b, respectively, thus transforming said ionizable gas into plasma;
- treating both surfaces M1, M2 of the workpiece M with the thus produced plasma.

In this embodiment, too, the aforementioned steps are carried out at a pressure equal or substantially equal to the atmospheric pressure.

Correspondingly, the surfaces of both mould elements 3, 5, are provided, at the cavity 11, with means (not shown) for urging the workpiece M away from both the first and the second mould elements 3, 5, so as to guarantee the formation of the first gap between the first mould element 3 and the first surface M1 of the workpiece M as well as of the second gap between the second mould element 5 and the second surface M2 of the workpiece M.

In the case of plasma deposition of a desired substance onto the surfaces M1, M2, one or more additional ducts (not shown) for the introduction of the substance to be deposited may be provided in the first and second mould elements 3, 5.

It is evident from the above description that the arrangement and the method according to the invention attain the objects set forth above.

It is also evident that the embodiments described and illustrated above have been given only by way of example and that several modifications and variants can be made, for example as far as the number and arrangement of the nozzles for the introduction of an ionizable gas and of the electric discharge generators are concerned, without thereby departing from the scope of protection as defined in the appended claims.

## Claims

1. Arrangement (1) for plasma treatment of workpieces (M), comprising a mould formed by one or more mould elements (3, 5) designed so that they define between them a cavity (11) having a shape and size substantially equal to those of said workpiece (M), at least one of said mould elements being designed as movable, **characterized in that** at least one of said mould elements (3, 5) is provided with one or more ducts (13; 13'; 13a, 13b) for the introduction of an ionizable gas, which ducts are connected to respective sources of ionizable gas (15; 15'; 15a, 15b) and end with respective nozzles (17; 17'; 17a, 17b) opening at the surface of said mould element facing said cavity (11), and with one or more electric discharge generators (19; 19'; 19a, 19b), which end at the surface of said mould element facing said cavity (11) and are electrically insulated from said mould element, and **in that** said arrangement (1) operates at a pressure equal or substantially equal to the atmospheric pressure, whereby it has no means for creating vacuum conditions within said cavity (11).

2. Arrangement (1) according to claim 1, wherein said mould comprises at least a first mould element (3) and a second mould element (5), arranged on opposite sides of said cavity (11), at least one of said first and second mould elements being movable relative to the other one of said first and second mould elements, at least one of said first and second mould elements being provided with said one or more ionisable gas ducts (13; 13'; 13a, 13b) and with said one or more electric discharge generators (19; 19'; 19a, 19b).

3. Arrangement (1) according to claim 2, wherein the surface of said at least one of said first and second mould elements is provided, at said cavity (11), with means for urging said workpiece (M) away from said at least one of said first and second mould elements.

4. Arrangement (1) according to claim 2, wherein both said first and second mould elements are provided with respective one or more ionisable gas ducts (13a, 13b) and with respective one or more electric discharge generators (19a, 19b).

5. Arrangement (1) according to claim 4, wherein the surfaces of both said first and second mould elements are provided, at said cavity (11), with respective means for urging said workpiece (M) away from said first and said second mould elements, respectively.

6. Arrangement (1) according to any of the preceding claims, wherein said at least one of said mould elements is provided with one or more additional ducts, which are connected to respective sources of a substance to be deposited onto said workpiece (M) and end with respective nozzles opening at the surface of said mould element facing said cavity (11).

7. Arrangement (1) according to any of the preceding claims, wherein said one or more electric discharge generators (19; 19'; 19a, 19b) comprise each a pair of electrodes, between which a potential difference is established, and an element for generating a spark between said electrodes.

8. Arrangement (1) according to any of the preceding claims, wherein said workpiece (M) is a workpiece made of a plastic material and wherein at least one of said mould elements is provided with a duct (21) for injecting molten plastic material into said cavity (11).

9. Method for plasma treatment of a workpiece (M) by means of an arrangement (1) according to any of the claims 1 - 8, **characterized in that** it comprises the steps of:
- providing said workpiece (M) in said cavity (11);
- moving said mould elements away from one another so as to obtain at least one gap between said at least one mould element provided with said one or more ducts for introducing an ionizable gas (13; 13'; 13a, 13b) and with said one or more electric discharge generators (19; 19'; 19a, 19b) and the surface (M1, M2) of said workpiece facing said at least one mould element;
- introducing an ionizable gas into said gap by means of said nozzles (17; 17'; 17a, 17b) of said ionizable gas ducts (13; 13'; 13a, 13b);
- producing an electric discharge through said ionizable gas by means of said electric discharge generators (19; 19'; 19a, 19b), thus transforming said ionizable gas into plasma;
- treating said surface of said workpiece with said plasma,
wherein said steps are carried out at a pressure equal or substantially equal to the atmospheric pressure.

10. Method according to claim 9, wherein said mould comprises at least a first mould element (3) and a second mould element (5), arranged on opposite sides of said cavity (11), at least one of said first and second mould elements being movable relative to the other one of said first and second mould elements, wherein both said first and second mould elements are provided with respective one or more ionisable gas ducts (13a, 13b) and with respective one or more electric discharge generators (19a, 19b), and wherein the method comprises the steps of:
- providing said workpiece (M) in said cavity (11);
- moving said first and second mould elements away from each other so as to obtain a first gap between said first mould element and the surface of said workpiece facing said first mould element, and a second gap between said second mould element and the surface of said workpiece facing said second mould element;
- introducing an ionizable gas into said first and said second gaps by means of said nozzles (17a, 17b) of said ionizable gas ducts (13a, 13b);
- producing an electric discharge through said ionizable gas by means of said electric discharge generators (19a, 19b), thus transforming said ionizable gas into plasma;
- treating said surfaces of said workpiece with said plasma.
wherein said steps are carried out at a pressure equal or substantially equal to the atmospheric pressure.

11. Method according to claim 9 or 10, wherein in said step of producing an electric discharge through said ionizable gas by means of said electric discharge generators (19a, 19b) comprises in turn the steps of generating a potential difference between a pair of electrodes of said electric discharge generators and generating a spark between said electrodes.

12. Method according to claim 9 or 10, wherein said workpiece (M) is a workpiece made of plastic material, and wherein said method further comprises the steps of:
- injecting molten plastic material into said cavity (11);
- letting said plastic material solidify and cool down, thus forming the workpiece (M).
